# EUROPÄISCHE PATENTANMELDUNG

(11) **EP 2 769 935 A1**
(43) Veröffentlichungstag der Anmeldung: **27.08.2014**
(21) Anmeldenummer: 13156493.2
(22) Anmeldetag: 25.02.2013
(51) Int. Cl.: B65G 1/137, B65G 11/06

(54) **Kommissioniervorrichtung und Kommissionierverfahren**

(71) Anmelder: Gollmann Kommissioniersysteme GmbH, 06112 Halle (DE); Kasten, Alexander, 06110 Halle (DE)
(72) Erfinder: Gollmann, Daniel, 06112 Halle (DE); Kasten, Alexander, 06110 Halle (DE)
(74) Vertreter: Steiniger, Carmen

(57) **Zusammenfassung**

Die vorliegende Erfindung betrifft eine Kommissioniervorrichtung und ein entsprechendes Verfahren zum Kommissionieren kubisch verpackter Artikel, wobei die Kommissioniervorrichtung eine Zuführeinrichtung zum Transportieren von Artikeln zu einer Artikelübergabestelle und eine Transporteinrichtung zum Hin- und Wegtransportieren der Sammelbehältern zu bzw. von der Artikelübergabestelle aufweist. Mit der vorliegenden Erfindung sollen Kosten, Effizienz und Stellfläche der Kommissioniervorrichtung verbessert werden, wobei das Kommissionierverfahren eine eindeutige Zuordnung der Artikel zu den jeweiligen Sammelbehältern ermöglichen und darüber hinaus auch in Spitzenzeiten zuverlässig einsetzbar sein soll. Hierfür ist vorgesehen, dass zwischen der Zuführeinrichtung und der wenigstens einen Artikelübergabestelle eine Artikelpuffervorrichtung zum zeitlichen Zwischenlagern des wenigstens einen Artikels vorgesehen ist, wobei die Artikelpuffervorrichtung wenigstens einen Artikelspeicherturm mit jeweils wenigstens zwei vertikal übereinander angeordneten Pufferplätzen und jeweils einer Fahrstuhlvorrichtung mit einem vertikal verfahrbaren Artikelaufnahmebehälter aufweist. Der Artikelaufnahmebehälter ist derart an der Zuführvorrichtung und auf Höhe der Pufferplätze positionierbar, dass er den wenigstens einen Artikel von der Zuführeinrichtung aufnehmen und an wenigstens einem der Pufferplätze ausgeben kann. An jeden der Pufferplätze schließt sich eine tendenziell vertikal nach unten gerichtete Artikelförderstrecke zum schwerkraftveranlassten Fördern der an den Pufferplätzen zwischengelagerten Artikel in Richtung der Artikelübergabestelle an.

## Beschreibung

Die vorliegende Erfindung betrifft eine Kommissioniervorrichtung zum Kommissionieren kubisch verpackter Artikel, welche eine Zuführeinrichtung zum Transportieren wenigstens eines der Artikel zu wenigstens einer Artikelübergabestelle, an welcher eine Übergabe des wenigstens einen Artikels in wenigstens einen Sammelbehälter erfolgt, und eine Transporteinrichtung zum Hintransportieren der Sammelbehälter zu der Artikelübergabestelle und zum Wegtransportieren der mit dem wenigstens einen Artikel bepackten Sammelbehälter von der Artikelübergabestelle aufweist. Die vorliegende Erfindung betrifft ferner ein Verfahren zum Kommissionieren kubisch verpackter Artikel mit einer Kommissioniervorrichtung, wobei durch eine Zuführeinrichtung wenigstens einer der Artikel zu wenigstens einer Artikelübergabestelle transportiert wird, und an der Artikelübergabestelle eine Übergabe des wenigstens einen Artikels in wenigstens einen Sammelbehälter erfolgt, der durch eine Transporteinrichtung zu der Artikelübergabestelle hin transportiert wird und mit dem wenigstens einen Artikel bepackt von der Artikelübergabestelle weg transportiert wird.

Kommissioniervorrichtungen und Verfahren der oben genannten Gattung sind im Stand der Technik in vielfältiger Weise bekannt. Eine solche bekannte Vorrichtung nutzt beispielsweise sogenannte Kippförderer. Bei den Kippförderern sind auf lang gezogenen Förderbändern kippbare Schalen vorgesehen, in welche beispielsweise von einem Besteller angeforderte und aus einem Lager ausgewählte verpackte Bücher oder Kataloge hineingelegt werden. Die Förderbänder bewegen sich dabei kontinuierlich. Sind von einem Besteller in einem Auftrag mehrere Bücher oder Kataloge angefordert worden, werden zunächst alle angeforderten Artikel in Kippschalen auf dem Förderband abgelegt. Wenn alle in dem Auftrag angeforderten Artikel in Kippschalen auf dem Förderband abgelegt sind, erhält ein Mitarbeiter die Information, dass alle in dem Auftrag abgeforderten Artikel auf dem Förderband vorliegen. Daraufhin wird durch den Mitarbeiter gewartet, bis die jeweiligen Artikel zu ihm auf dem Förderband befördert wurden. An der Position des Mitarbeiters werden die dem Auftrag zuzuordnenden Schalen ausgekippt, sodass der Mitarbeiter die Bepackung einer Kiste mit den angeforderten Artikeln vornehmen kann. Das Bepacken der Kisten kann auch automatisch durchgeführt werden.

Derartige Kommissioniervorrichtungen und -verfahren werden dann angewandt, wenn ein eindeutig identifizierter Artikel an eine bestimmte Anforderungsstelle geliefert werden soll. Ähnliche Prinzipien kommen beispielsweise auf Flughäfen zur Kofferkommissionierung zum Einsatz, wo bestimmte Gepäckstücke bestimmten Flugzeugen zugeordnet werden müssen.

Die bekannten Vorrichtungen und Verfahren besitzen den Nachteil, dass die verwendeten Förderbänder große Längen zur Aufnahme jeweils aller beispielsweise von einem Besteller angeforderten Artikel aufweisen müssen. Aufgrund der großen Länge der Förderbänder besitzen diese eine große Umlaufzeit. Sind die zu kommissionierenden Artikel beispielsweise in einem Lagerautomaten gelagert, der Außenabmessungen von 10 m x 10 m besitzt, läuft um jeden der Lagerautomaten ein Band mit einer Umlauflänge von ca. 40 Meter. Auf einer solchen Strecke können etwa 140 Kippschalen angeordnet werden. Dies führt dazu, dass die Umlaufzeit jeder Kippschale ca. 30 Sekunden beträgt. Erst dann kann die jeweilige Kippschale an einer Anforderungsstelle zur Endverpackung des in der Kippschale enthaltenen Artikels ausgekippt werden.

Um diese Form der Kommissionierung effektiver zu gestalten, hat man daher im Stand der Technik bei solchen Förderbändern mehrere, beispielsweise acht, Übergabestellen eingerichtet, an welchen ein Abkippen der Kippschalen möglich ist.

Die Kippfördersysteme sind bedingt durch die für jede der Kippschalen notwendige Kippanordnung allerdings sehr kostenintensiv.

Darüber hinaus benötigen solche Anlagen einen großen Raum, um möglichst lange Förderbänder installieren zu können, die auch in Spitzenzeiten, in welchen in sehr kurzer Zeit sehr viele Artikel angefordert werden, eine zuverlässige Kommissionierung ermöglichen.

Es ist daher die Aufgabe der vorliegenden Erfindung, eine Kommissioniervorrichtung der oben genannten Gattung mit erhöhter Effizienz, geringeren Herstellungskosten und verringerter Aufstellfläche zur Verfügung zu stellen. Ferner soll ein Kommissionierverfahren der oben genannten Gattung vorgeschlagen werden, mit dem auf effektive Weise auch in Spitzenzeiten eine zuverlässige Kommissionierung möglich ist.

Diese Aufgabe wird zum einen durch eine Kommissioniervorrichtung der oben genannten Gattung gelöst, bei welcher zwischen der Zuführeinrichtung und der wenigstens einen Artikelübergabestelle eine Artikelpuffervorrichtung zum zeitlichen Zwischenlagern des wenigstens einen Artikels vorgesehen ist, wobei die Artikelpuffervorrichtung wenigstens einen Artikelspeicherturm mit jeweils wenigstens zwei vertikal übereinander angeordneten Pufferplätzen und jeweils einer Fahrstuhlvorrichtung mit einem vertikal verfahrbaren Artikelaufnahmebehälter aufweist, der derart an der Zuführeinrichtung und auf Höhe der Pufferplätze positionierbar ist, dass der Artikelaufnahmebehälter den wenigstens einen Artikel von der Zuführeinrichtung aufnehmen und diesen wenigstens einen Artikel an wenigstens einem der Pufferplätze ausgeben kann, und wobei sich an jeden der Pufferplätze eine tendenziell vertikal nach unten gerichtete Artikelförderstrecke zum schwerkraftveranlassten Befördern der an den Pufferplätzen zwischengelagerten Artikel in Richtung der Artikelübergabestelle anschließt.

Die vorliegende Erfindung fügt somit zwischen die Zuführeinrichtung und die Artikelübergabestelle die Artikelpuffervorrichtung ein. In der Artikelpuffervorrichtung können die mit der Zuführeinrichtung gelieferten Artikel solange zwischengelagert werden, bis sie an der Artikelübergabestelle ausgegeben werden müssen. Die Artikelpuffervorrichtung ist in Form eines vertikalen Artikelspeicherturmes bzw. eines Vertikalförderers ausgebildet, wobei die Artikel bei der Zwischenspeicherung auf lokal bestimmten Pufferplätzen auf unterschiedlichen vertikalen Stufen des Artikelspeicherturmes zwischengelagert werden. Die Pufferplätze bilden dabei die einzelnen Elemente einer setzkastenähnlichen Zwischenspeicheranordnung der erfindungsgemäßen Kommissioniervorrichtung. Die Größe und vor allem die Länge der Pufferplätze ist abhängig von der Anzahl und/oder der Größe oder der Länge der zu speichernden bzw. zwischenzuspeichernden Artikel.

Indem der wenigstens eine Artikel von der Zuführeinrichtung mittels der Fahrstuhlvorrichtung aufgenommen und zu dem Pufferplatz gebracht wird, ist eine schonende Aufnahme und ein sicherer Transport des wenigstens einen Artikels gewährleistet. Ferner ist durch die Verwendung der Fahrstuhlvorrichtung immer eine eindeutige Identifikation des Transportweges des wenigstens einen Artikels möglich. Jeder Artikel, der von der Fahrstuhlvorrichtung aufgenommen wird, kann zudem genau identifiziert werden. Außerdem ist der Fahrstuhlkorb bzw. der Artikelaufnahmebehälter der Fahrstuhlvorrichtung sehr genau auf Höhe des jeweilig anzufahrenden Pufferplatzes positionierbar. Dadurch ist auch der Pufferplatz, an dem der jeweilige Artikel abgegeben wird, genau identifizierbar und bei der Konstruktion der erfindungsgemäßen Kommissioniervorrichtung einstellbar.

Die Artikel befinden sich somit bei der Zwischenlagerung an einer definierten Position und nicht, wie im Stand der Technik, auf einer sich durch die Bewegung des Förderbandes ständig verändernden Position im Raum. Durch die vertikale Anordnung der Pufferplätze in dem Artikelspeicherturm werden die Artikel in die Höhe gespeichert. Dadurch ist bei der vorliegenden Erfindung nur ein geringer horizontaler Platzbedarf für die Artikelpuffervorrichtung erforderlich. Lange Förderbänder und entsprechend große Förderbandhallen, wie sie im Stand der Technik benötigt werden, können somit bei Einsatz der vorliegenden Erfindung entfallen.

Die vertikale Übereinanderanordnung der Pufferplätze besitzt darüber hinaus den Vorteil, dass für ein Abgeben der Artikel aus den Pufferplätzen an die Artikelübergabestelle die Schwerkraft der Artikel genutzt werden kann. Ein auszugebender Artikel kann somit direkt von dem Pufferplatz in Richtung der Artikelübergabestelle auf der tendenziell vertikal nach unten gerichteten Förderstrecke gleiten oder fallen. Für diesen Teil der Artikelbeförderung werden daher in der vorliegenden Erfindung keine Antriebe oder dergleichen benötigt. Zudem kann das schwerkraftveranlasste Befördern der Artikel vom jeweiligen Pufferplatz in Richtung der Artikelübergabestelle sehr schnell realisiert werden. Wird zum Beispiel bei der vorliegenden Erfindung der Artikelspeicherturm mit 40 vertikal übereinander angeordneten Pufferplätzen, beispielsweise zur Einlagerung von Medikamentenpackungen, verwendet, benötigt eine Ausgabe einer Medikamentenpackung von dem obersten Pufferplatz bis zu der ganz unten an dem Artikelspeicherturm vorgesehenen Artikelübergabestelle ca. 8 Sekunden, in welchen die angeforderte Medikamentenpackung beispielsweise eine Wendelrutsche den Artikelspeicherturm hinabrutscht. Das heißt, durch die vorliegende Erfindung kann die Totzeit zwischen Artikelzuführung mittels der Zuführeinrichtung und Artikelkommissionierung an der Artikelübergabestelle sehr klein gehalten werden.

Zudem ist bei der erfindungsgemäß verwendeten Artikelpuffervorrichtung lediglich ein Antrieb für die Fahrstuhlvorrichtung zum Transport der Artikel zu den Pufferplätzen und die dortige Abgabe der Artikel an die Pufferplätze notwendig. Für das Hinabbefördern der Artikel von dem jeweiligen Pufferplatz zu der Artikelübergabestelle ist erfindungsgemäß grundsätzlich kein weiterer Antrieb erforderlich.

Gemäß einer bevorzugten Ausführungsform der Erfindung weist der wenigstens eine zu kommissionierende Artikel eine eindeutig den Artikel identifizierende Artikelkennung auf, und die Kommissioniervorrichtung weist eine den Transportweg des Artikels in der Kommissioniervorrichtung von seiner Aufgabe auf die Zuführeinrichtung bis zur Abgabe des Artikels an einen der Sammelbehälter steuernde und speichernde Steuereinrichtung auf. Somit ist es erfindungsgemäß möglich, für einen kommissionierten Artikel eine genaue Aussage über die Art des Artikels, dessen Herkunftsort, dessen Herkunftszeit, dessen Lagerzeit und/oder dessen Lagerbedingungen zur Verfügung zu stellen und darüber hinaus nachzuvollziehen, wann und an wen der Artikel geliefert wurde. Somit kann ein bereits an einen Besteller gelieferter Artikel genau rückverfolgt werden.

In einer vorteilhaften Ausgestaltung der erfindungsgemäßen Kommissioniervorrichtung ist der Artikelaufnahmebehälter ein oben offener Förderkorb mit mindestens einer seitlichen Öffnung, wobei der Förderkorb oder eine im Inneren des Förderkorbes vorgesehene Förderrutsche wenigstens teilweise um eine vertikale Behälterachse drehbar ist. Diese Ausgestaltung besitzt den Vorzug, dass der Förderkorb mit seiner oberen Öffnung so positioniert werden kann, dass er geeignet den wenigstens einen Artikel von der Zuführeinrichtung aufnehmen und mittels der seitlichen Öffnung diesen Artikel an dem jeweiligen Pufferplatz ablegen kann.

Ist im Inneren des Förderkorbes eine Förderrutsche vorgesehen, kann diese bei Positionierung des Artikelaufnahmebehälters an der Zuführeinrichtung so ausgerichtet werden, dass sie mit ihrem oberen Ende an die Zuführeinrichtung angrenzt, sodass der wenigstens eine Artikel von der Zuführeinrichtung auf die Förderrutsche abgegeben werden kann. Befindet sich der Artikelaufnahmebehälter nach einem vertikalen Verfahren des Artikelaufnahmebehälters auf Höhe des Pufferplatzes, an dem der wenigstens eine Artikel ausgegebenen werden soll, kann die Förderrutsche durch Drehung um die vertikale Behälterachse so ausgerichtet werden, dass der wenigstens eine auf der Förderrutsche befindliche Artikel von der Förderrutsche durch die seitliche Öffnung auf den jeweiligen Pufferplatz rutscht.

Durch diese konstruktive Lösung kann die Zuführeinrichtung an einer anderen Seite des Artikelspeicherturms als dessen Pufferplätze vorgesehen werden. Hierdurch ist eine freie Zuführung der Artikel zu dem Artikelspeicherturm und eine freie Zwischenlagerung der Artikel auf den Pufferplätzen möglich. Das bedeutet, dass während beispielsweise noch eine Lagerung wenigstens eines Artikels auf einem Pufferplatz mittels des Artikelaufnahmebehälters erfolgt, andererseits bereits durch die Zuführeinrichtung wenigstens ein weiterer Artikel der Artikelpuffervorrichtung zugeführt werden kann.

Außerdem ist durch die Drehbarkeit des Artikelaufnahmebehälters eine hohe Variabilität im Hinblick auf den Ort der Aufnahme und dem Ort der Abgabe von Artikeln möglich. In einer speziellen Ausgestaltung können beispielsweise an dem Förderkorb zwei einander gegenüber liegende Öffnungen vorgesehen sein, sodass beidseitig des Förderkorbes Pufferplätze vorgesehen sein können, die von einem einzigen Artikelaufnahmebehälter beliefert werden.

Vorzugsweise weist die Artikelförderstrecke eine Wendelrutsche auf. Mit der Wendelrutsche können die auf den Pufferplätzen zwischengespeicherten Artikel schnell und einfach nach unten, in Richtung der Artikelübergabestelle befördert werden. Zudem wird der wenigstens eine Artikel auf der Wendelrutsche schonend nach unten befördert.

Grundsätzlich ist es in anderen Ausführungsformen der vorliegenden Erfindung auch möglich, den wenigstens einen Artikel mittels einer Fallvorrichtung oder mit einem zumindest einen Teil der Förderstrecke überbrückenden Förderband in Richtung der Artikelübergabestelle zu befördern. Bei Verwendung einer Wendelrutsche kann die Wirkung der Gravitation jedoch sowohl für eine schonende Hinabbeförderung als auch für ein schnelles Hinausbefördern des jeweiligen Artikels aus dem jeweiligen Pufferplatz ausgenutzt werden.

Dabei ist es grundsätzlich möglich, mehr als eine Wendelrutsche um die Fahrstuhlvorrichtung vorzusehen. So können beispielsweise an mehreren Seiten der Fahrstuhlvorrichtung Pufferplätze zum Zwischenlagern von Artikeln vorgesehen werden, die jeweils mit einer Wendelrutsche gekoppelt sind. Hierdurch können entsprechend mehr Artikel zwischengelagert und durch die Wendelrutschen an verschiedene Artikelübergabestellen befördert werden. Entsprechend kann die Effizienz der Kommissioniervorrichtung in Abhängigkeit von der Anzahl der Pufferplätze und der Wendelrutschen gesteigert werden.

Ferner ist es möglich, durch den Abstand zwischen Wendelrutsche und Fahrstuhlvorrichtung den Speicherplatz der Pufferplätze zu variieren.

Besonders vorteilhaft ist es, wenn die Pufferplätze selbst als Rutschen ausgebildet sind, wobei im Rutschenverlauf oder am Rutschenende jeweils eine öffen- und schließbare Pufferplatzschranke vorgesehen ist. Bei Einlagerung des wenigstens einen Produktes auf dem jeweiligen Pufferplatz ist die Pufferplatzschranke geschlossen. Entsprechend kann bei der Einlagerung des wenigstens einen Artikels auf dem Pufferplatz dieser bis an die Pufferplatzschranke rutschen und wird durch diese solange auf dem Pufferplatz gehalten, bis die Pufferplatzschranke geöffnet wird. Durch die Ausbildung des Pufferplatzes als Rutsche kann bei einem Öffnen der Pufferplatzschranke der wenigstens eine Artikel sofort oder mittelbar auf die Artikelförderstrecke, die beispielsweise auch als Wendelrutsche ausgebildet ist, rutschen und in Richtung der Artikelübergabestelle befördert werden.

Es hat sich zudem als günstig erwiesen, wenn am Ende der Artikelförderstrecke, vor der Artikelübergabestelle ein Abgabeförderband zum Befördern und Abgeben des wenigstens einen Artikels in den wenigstens einen Sammelbehälter vorgesehen ist. So kann der vertikal nach unten über die Artikelförderstrecke beförderte Artikel auf dem Abgabeförderband horizontal in Richtung des Sammelbehälters befördert und von dem Abgabeförderband an den Sammelbehälter abgegeben werden. Das Abgabeförderband muss nur dann in Betrieb genommen werden, wenn tatsächlich Artikel der jeweiligen Artikelübergabestelle in einem Sammelbehälter zu befördern sind, kann aber auch dauerhaft in Betrieb sein.

Dabei ist es möglich, dass auf dem Transportweg oder an dem die Artikelübergabestelle bildenden Ende des Abgabeförderbandes eine öffen- oder schließbare Stauklappe vorgesehen ist. Wenn diese Stauklappe geschlossen ist, können die durch das Abgabeförderband in Richtung des Sammelbehälters beförderten Artikel an der Stauklappe zunächst solange aufgehalten werden, bis sich der entsprechende Sammelbehälter an der Artikelübergabestelle befindet, sodass eine zuverlässige Artikelübergabe von dem Abgabeförderband in den Sammelbehälter nach Öffnen der Stauklappe vorgenommen werden kann.

Das Vorsehen eines Abgabeförderbandes eröffnet ferner die Möglichkeit, dass das Abgabeförderband auch in umgekehrter Richtung, das heißt, in einer von der Artikelüber gabestelle weg führenden Transportrichtung betrieben werden kann. In einem solchen Fall kann an dem der Artikelübergabestelle gegenüber liegenden Ende des Abgabeförderbandes eine Aufnahmevorrichtung zur Auslagerung von Artikeln vorgesehen sein. Eine solche Aufnahmevorrichtung kann in einer einfachen Ausgestaltung eine auswechselbare Kiste sein.

Um eine eindeutige Zuordnung des an der Artikelübergabestelle übergebenen wenigstens einen Artikels zu demjenigen Sammelbehälter vornehmen zu können, an welchen der wenigstens eine Artikel übergeben wird, ist in einem Ausführungsbeispiel der erfindungsgemäßen Kommissioniervorrichtung an der Artikelübergabestelle wenigstens ein Identifikationssensor zur Identifikation des Sammelbehälters, in den der wenigstens eine an der Artikelübergabestelle in den Sammelbehälter abgegebene Artikel abgegeben wird, vorgesehen. Der Identifikationssensor ist vorzugsweise mit einer Steuereinrichtung der Kommissioniervorrichtung verbunden.

In einer weiteren Variante der erfindungsgemäßen Kommissioniervorrichtung weist die Zuführeinrichtung wenigstens ein Zuführförderband auf, das von wenigstens einem Artikelspeicher oder wenigstens einer automatisch oder manuell kommissionierbaren Aufgabestelle zu dem wenigstens einen Artikelspeicherturm der Artikelpuffervorrichtung führt, wobei auf dem Zuführförderband auf wenigstens einer Öffnungshöhe der Fahrstuhlvorrichtung des wenigstens einen Artikelspeicherturmes wenigstens eine aktivier-und deaktivierbare Weiche zur Ableitung der Artikel von dem Zuführförderband in den Artikelaufnahmebehälter der Fahrstuhlvorrichtung des jeweiligen Artikelspeicherturmes vorgesehen ist. So kann ein auf dem Zuführförderband bei der Artikelpuffervorrichtung angelieferter Artikel mittels der aktivierten, das heißt, den weiteren Transportweg des Artikels versperrenden Weiche in Richtung des Artikelspeicherturmes um- bzw. abgeleitet werden. Befindet sich in diesem Moment der Artikelaufnahmebehälter der Fahrstuhlvorrichtung auf Höhe des Zuführförderbandes und an der Position der Weiche, kann der wenigstens eine Artikel von dem Zuführförderband in den Artikelaufnahmebehälter der Fahrstuhlvorrichtung befördert werden.

Hierbei ist es in einer besonders zweckmäßigen Ausgestaltung der erfindungsgemäßen Kommissioniervorrichtung vorgesehen, dass zwischen dem durch die Weiche definierbaren Ableitpunkt der Artikel auf dem Zuführförderband und dem Artikelaufnahmebehälter eine Artikelableitrutsche vorgesehen ist. Über die Artikelableitrutsche können die von der Weiche um- bzw. abgeleiteten Artikel direkt in den Artikelaufnahmebehälter gleiten. Vorzugsweise ist das Ende der Artikelableitrutsche an einen Außenumfangsbereich des Artikelaufnahmebehälters angepasst. Ist der Artikelaufnahmebehälter beispielsweise ein zylindrischer Förderkorb, ist es empfehlenswert, das Ende der Artikelableitrutsche mit einem halbkreisförmigen Ausschnitt zu versehen, sodass ein lückenloser Übergang von Artikeln vom Zuführförderband in den Artikelaufnahmebehälter gewährleistet ist.

Die Effizienz der erfindungsgemäßen Kommissioniervorrichtung kann noch dadurch erhöht werden, dass die Zuführeinrichtung wenigstens zwei in unterschiedlichen Höhen verlaufende Förderstrecken aufweist, wobei jede Förderstrecke ein eigenes Zuführförderband aufweist. Dabei ist es möglich, jedes Zuführförderband einem Artikelspeicherturm zuzuordnen. So können über mehrere vertikale Ebenen unterschiedliche Artikelspeichertürme über mehrere Förderstrecken mit Artikeln zu deren Zwischenspeicherung beliefert werden.

In einer vorteilhaften Weiterbildung der erfindungsgemäßen Kommissioniervorrichtung sind bei wenigstens einem der Artikelspeichertürme die Pufferplätze und die zugehörigen Artikelförderstrecken an wenigstens zwei Seiten der Fahrstuhlvorrichtung vorgesehen. Die Fahrstuhlvorrichtung ist bei dieser Ausführungsform so ausgebildet, dass sie die zu beiden Seiten vorgesehenen Pufferplätze mit Artikeln beliefern kann. Da auch die den Pufferplätzen zugeordneten Artikelförderstrecken an unterschiedlichen Seiten der Fahrstuhlvorrichtung vorgesehen sind, können diese ungehindert voneinander einen vertikalen Hinabtransport angeforderter Artikel von den jeweiligen Pufferplätzen zu den jeweiligen Artikelübergabestellen gewährleisten. Dabei ist es möglich, dass die jeweiligen Artikelförderstrecken mit voneinander separaten Artikelübergabestellen gekoppelt sind. Grundsätzlich ist es jedoch auch denkbar, dass die Artikelförderstrecken wenigstens eines Artikelspeicherturmes an den Enden der Artikelförderstrecken zu einer gemeinsamen Artikelübergabestelle, beispielsweise durch Einsatz entsprechender Förderbänder, zusammengeführt werden.

Die Aufgabe wird ferner durch ein Verfahren der oben genannten Gattung gelöst, bei welchem der wenigstens eine Artikel in einer zwischen der Zuführeinrichtung und der wenigstens einen Artikelübergabestelle vorgesehenen Artikelpuffervorrichtung zwischengelagert wird, indem die Artikelpuffervorrichtung wenigstens einen Artikelspeicherturm mit jeweils wenigstens zwei vertikal übereinander angeordneten Pufferplätzen und jeweils einer Fahrstuhlvorrichtung mit einem vertikal verfahrbaren Artikelaufnahmebehälter aufweist, der an der Zuführeinrichtung positioniert wird, wobei der Artikelaufnahmebehälter den wenigstens einen Artikel von der Zuführeinrichtung aufnimmt, daraufhin der Artikelaufnahmebehälter auf Höhe eines der Pufferplätze positioniert wird und dort der wenigstens eine Artikel auf dem Pufferplatz ausgegeben wird, auf dem der wenigstens eine Artikel bis zu seiner Abforderung gelagert wird, und wobei zur Ausgabe dieses wenigstens einen Artikels dieser über eine sich an jeden der Pufferplätze anschließende, tendenziell vertikal nach unten gerichtete Artikelförderstrecke durch seine Schwerkraft nach unten in Richtung der Artikelübergabestelle befördert wird.

Mithilfe des erfindungsgemäßen Verfahrens ist eine besonders vorteilhafte Kommissionierung kubisch verpackter Artikel, insbesondere kubisch verpackter Kleinprodukte, wie Arzneimitteln, möglich. Insbesondere gestattet es das erfindungsgemäße Verfahren, vorteilhaft die Kommissionierung auch in Spitzenzeiten vorzunehmen, in welchen eine große Anzahl von Artikeln in kürzester Zeit abgefordert wird. Diese Artikel können in der Artikelpuffervorrichtung zwischengelagert werden, bis der oder die Sammelbehälter, in welche diese Artikel aufgenommen werden sollen, an der Artikelübergabestelle ankommen. Es kann somit in dem Zeitraum, in welchem bereits die Information der Abforderung an der Kommissioniervorrichtung vorliegt, aber noch kein Sammelbehälter zur Aufnahme dieser Artikel an der Artikelübergabestelle angekommen ist, eine Auswahl und Zuführung der abgeforderten Artikel über die Zuführeinrichtung bis zu der Artikelpuffervorrichtung erfolgen, wo die jeweils abgeforderten Artikel auf den Pufferplätzen zwischengelagert werden.

Da die Bestückung der Pufferplätze mittels der erfindungsgemäß vorgesehenen Fahrstuhlvorrichtung erfolgt, ist ein schonender Transport und eine sichere Ausgabe der Artikel von dem Artikelaufnahmebehälter der Fahrstuhlvorrichtung auf die Pufferplätze gewährleistet.

Außerdem ist exakt nachvollziehbar, welche Artikel auf welchem Pufferplatz zwischengespeichert wird, sodass nicht nur die Daten des jeweiligen Artikels, sondern sein gesamter Transportweg durch die Kommissioniervorrichtung, einschließlich der Zuführung des Artikels, nachvollziehbar sind.

Ein besonderer Vorteil des erfindungsgemäßen Verfahrens liegt darin, dass die Auslagerung der auf den Pufferplätzen zwischengelagerten Artikel bis hin zu der Artikelübergabe sehr schnell erfolgt, da schwerkraftbedingt ein schneller vertikaler Hinabtransport von den Pufferplätzen über die Artikelförderstrecke bis hin zur Artikelübergabestelle realisierbar ist. Darüber hinaus benötigt dieser Hinabtransport keine zusätzlichen Antriebe, da er allein gravitationsbefördert vorgenommen werden kann.

Indem bei dem erfindungsgemäßen Verfahren die Pufferplätze in dem Artikelspeicherturm vertikal übereinander angeordnet sind, wird für das Vorsehen der Artikelpuffervorrichtung nur eine begrenzte Stellfläche benötigt.

In einer bevorzugten Ausführungsform des erfindungsgemäßen Verfahrens wird der wenigstens eine Artikel identifiziert und der Transportweg des Artikels durch die Kommissioniereinrichtung mit einer Steuereinrichtung gesteuert und gespeichert. Durch diese Vorgehensweise können die Artikel vollautomatisiert durch die Kommissioniereinrichtung transportiert und identifiziert an der Artikelübergabestelle an einen ebenfalls identifizierbaren Sammelbehälter abgegeben werden. Hierdurch wird eine eineindeutige Identifikation zwischen Artikel und Sammelbehälter bei gleichzeitig sehr hoher Effizienz der Kommissionierung ermöglicht.

Weitere Varianten des erfindungsgemäßen Verfahrens ergeben sich aus den oben beschriebenen unterschiedlichen Ausführungsformen der erfindungsgemäßen Kommissioniervorrichtung.

Bevorzugte Ausführungsformen der vorliegenden Erfindung, deren Aufbau, Funktion und Vorteile werden im Folgenden anhand der Figuren näher erläutert, wobei
- Figur 1: schematisch einen möglichen Aufbau einer erfindungsgemäßen Kommissioniervorrichtung in einer Draufsicht zeigt;
- Figur 2: schematisch die Kommissioniervorrichtung aus Figur 1 in einer perspektivischen Ansicht zeigt;
- Figur 3: schematisch die Kommissioniervorrichtung aus den Figuren 1 und 2 in einer Seitenansicht zeigt;
- Figur 4: schematisch in einer perspektivischen Darstellung eine mögliche Ausbildung eines in der erfindungsgemäßen Kommissioniervorrichtung einsetzbaren Artikelspeicherturmes, gesehen von einer Zuführeinrichtung der Kommissioniervorrichtung aus, zeigt;
- Figur 5: schematisch den Artikelspeicherturm aus Figur 4 in einer Vorderansicht, gesehen von der Zuführeinrichtung der Kommissioniervorrichtung aus, zeigt;
- Figur 6: schematisch in einer perspektivischen Darstellung den Artikelspeicherturm der Figuren 4 und 5, gesehen von Artikelübergabestellen aus, zeigt;
- Figur 7: schematisch in einer perspektivischen Darstellung einen Ausschnitt aus einem Artikelspeicherturm einer erfindungsgemäßen Kommissioniervorrichtung zeigt, wobei unter anderem ein Artikelaufnahmebehälter einer Fahrstuhlvorrichtung und eine mögliche Ausbildung eines Pufferplatzes dargestellt sind; und
- Figur 8: schematisch eine vergrößerte perspektivische Darstellung eines Teils eines in den Figuren 4 bis 6 dargestellten Abgabeförderbandes zeigt.

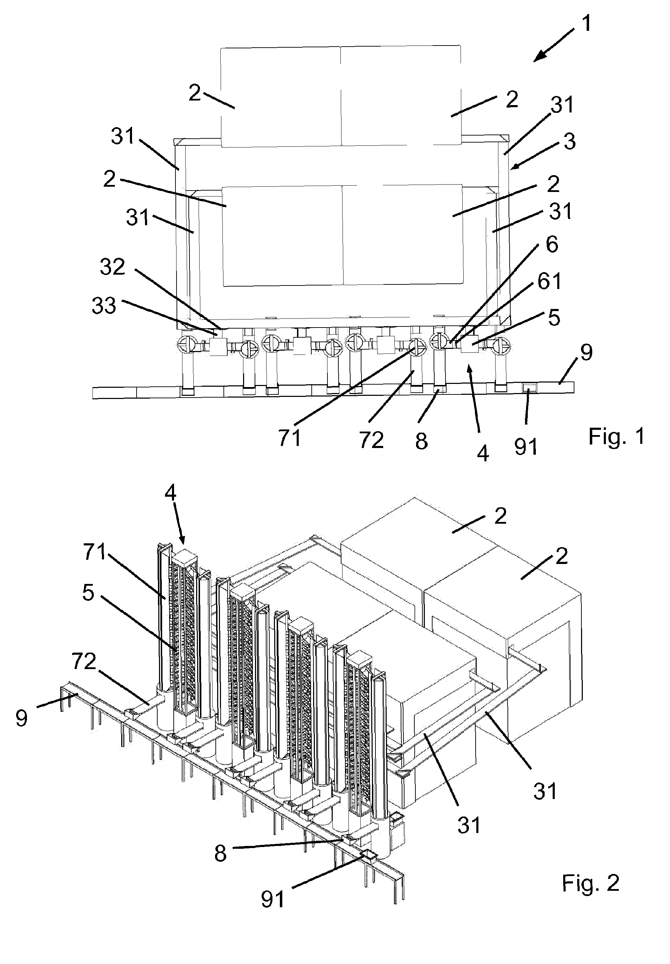

Figuren 1 bis 3 zeigen schematisch eine mögliche Ausführungsform einer erfindungsgemäßen Kommissioniervorrichtung 1 in verschiedenen Ansichten. Die Kommissioniervorrichtung 1 weist in dem dargestellten Ausführungsbeispiel Artikelspeicher 2 in Form von vier Speicherautomaten auf, in welchen kubisch verpackte Artikel gespeichert sind. Bei den Artikeln handelt es sich in der dargestellten Ausführungsform um Medikamentenpackungen. In anderen, nicht dargestellten Ausführungsformen der vorliegenden Erfindung können als Artikel auch andere kubisch verpackte Kleinprodukte, wie zum Beispiel Zigaretten, Kosmetika, Bücher, Kataloge oder Spiele, in den Artikelspeichern 2 gelagert sein. Die Artikel sind typischerweise wertige Kleinprodukte, deren physische äußere Form an einen Transport der Kleinprodukte in der Kommissioniervorrichtung 1 angepasst ist. Dabei ist der Ausdruck "kubisch" so zu verstehen, dass die mit der erfindungsgemäßen Kommissioniervorrichtung 1 kommissionierten Artikel hinsichtlich ihrer äußeren Verpackungsabmessungen im Wesentlichen kubisch sind und die Verpackung eine im Wesentlichen flache Grundfläche besitzt, die eine für den Transport und die nachfolgend beschriebene Zwischenlagerung der Artikel in der erfindungsgemäßen Kommissioniervorrichtung 1 erforderliche Haftreibung ermöglicht.

Obwohl in der Ausführungsform der Figuren 1 bis 3 für die ursprüngliche Lagerung der Artikel Speicherautomaten vorgesehen sind, können die Artikelspeicher 2 auch durch wenigstens eine automatisch oder manuell kommissionierbare Artikelaufgabestelle ersetzt werden. Das heißt, die Artikel können grundsätzlich auch von Hand auf eine Zuführeinrichtung 3 aufgelegt oder anderweitig aufgebracht werden. In diesem Fall können die Artikelspeicher 2 entfallen oder an einer anderen Stelle, das heißt, entfernt von der Zuführeinrichtung 3, vorgesehen sein.

Die Artikelspeicher 2 können beispielsweise wie in dem europäischen Patent EP 1820754 ausgebildet sein. Es sind jedoch auch vielfältige andere Ausgestaltungsmöglichkeiten der Artikelspeicher 2 möglich.

Wie es ebenfalls schematisch in den Figuren 1 bis 3 gezeigt ist, ist jeder der Artikelspeicher 2 mit der Zuführeinrichtung 3 verbunden. In den Ausführungsformen der Figuren 1 bis 3 weist die Zuführeinrichtung 3 Förderbänder 31 auf, welche einzelne Förderstrecken ausbilden. Die Förderbänder 31 der Zuführeinrichtung 3 führen zu Artikelspeichertürmen 4. Obgleich in der Ausführungsform der Figuren 1 bis 3 vier Artikelspeichertürme 4 dargestellt sind, können in anderen Ausführungsformen der erfindungsgemäßen Kommissioniervorrichtung 1 auch nur ein einziger Artikelspeicherturm 4 oder eine andere Anzahl von Artikelspeichertürmen 4 vorgesehen sein. Gleiches gilt für die Anzahl der Förderbänder 31. Die Artikelspeichertürme 4 sind in den nachfolgenden Figuren noch näher erläutert.

Bei der in den Figuren 1 bis 3 dargestellten Ausführungsform der erfindungsgemäßen Kommissioniervorrichtung 1 befindet sich bei den jeweils verwendeten Artikelspeichertürmen 4 jeweils mittig eine Fahrstuhlvorrichtung 5. Das Förderband 31 der Zuführeinrichtung 3 ist über eine Artikelrutsche 33 mit der Fahrstuhlvorrichtung 5 gekoppelt. In der Darstellung der Figuren 1 bis 3 ist zwischen dem Förderband 31 und der Artikelableitrutsche 33 eine geschlossene Weiche 32 vorgesehen, welche, wie es im Folgenden noch erläutert wird, bei Bedarf geöffnet werden kann.

In der gezeigten Ausführungsform sind beidseitig der Fahrstuhlvorrichtung 5 Pufferplätze 6 vorgesehen, auf welchen Artikel zwischengelagert werden können. Die Pufferplätze 6 sind in dem Ausführungsbeispiel der Figuren 1 bis 3 durch Pufferplatzschranken 61 verschlossen, sodass die auf den Pufferplätzen 6 durch die Fahrstuhlvorrichtung 5 abgelegten Artikel auf dem jeweiligen Pufferplatz 6 gehalten werden können. Die Pufferplatzschranken 61 können, wie es nachfolgend noch näher erläutert ist, zur Abgabe der auf den Pufferplätzen 6 zwischengelagerten Artikel 6 geöffnet werden.

An die Pufferplätze 6 schließt sich jeweils eine Artikelförderstrecke an, durch welche die auf den Pufferplätzen 6 zwischengelagerten Artikel nach Öffnung der Pufferplatzschranken 61 im Wesentlichen vertikal nach unten in Richtung einer Artikelübergabestelle 8 befördert werden können. Die Artikelförderstrecken weisen in der Ausführungsform der Figuren 1 bis 3 jeweils eine Wendelrutsche 71 und ein sich an die Wendelrutsche 71 anschließendes Abgabeförderband 72 auf.

Da in der Ausführungsform der Figuren 1 bis 3 mehrere Artikelspeichertürme 4 mit jeweils zwei Artikelförderstrecken und entsprechenden Wendelrutschen 71 sowie Abgabeförderbändern 72 vorgesehen sind, sind hier auch mehrere Artikelübergabestellen 8 vorgesehen.

Im Anschluss an die Artikelübergabestellen 8 ist eine Transporteinrichtung 9 vorgesehen. Die Transporteinrichtung 9 dient einem Hintransportieren von Sammelbehältern 91 zu den jeweiligen Artikelübergabestellen 8 sowie einem Wegtransportieren der mit wenigstens einem Artikel bepackten Sammelbehälter 91 zu einer Endausgabestelle der Kommissioniervorrichtung 1.

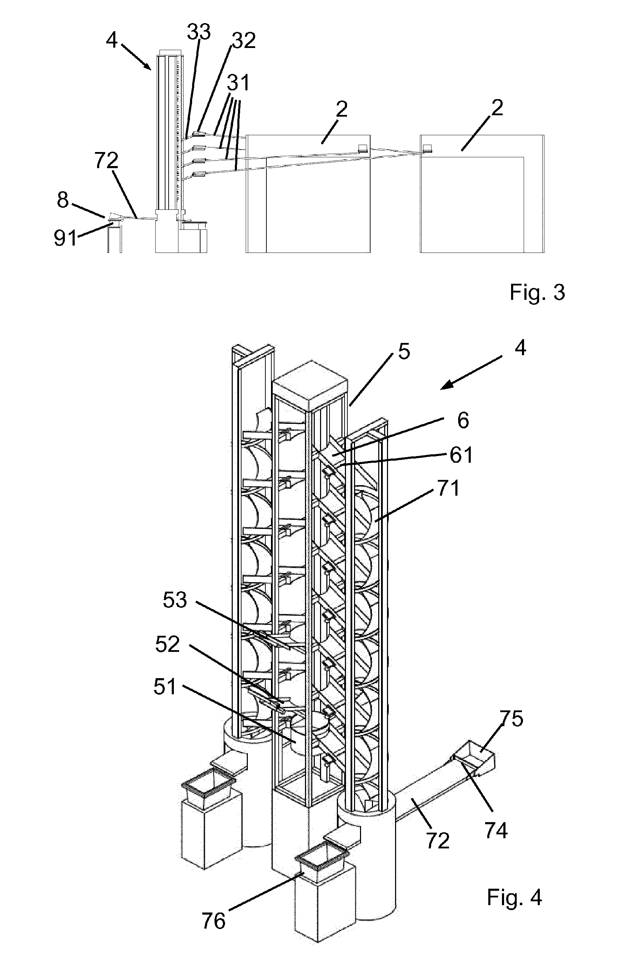

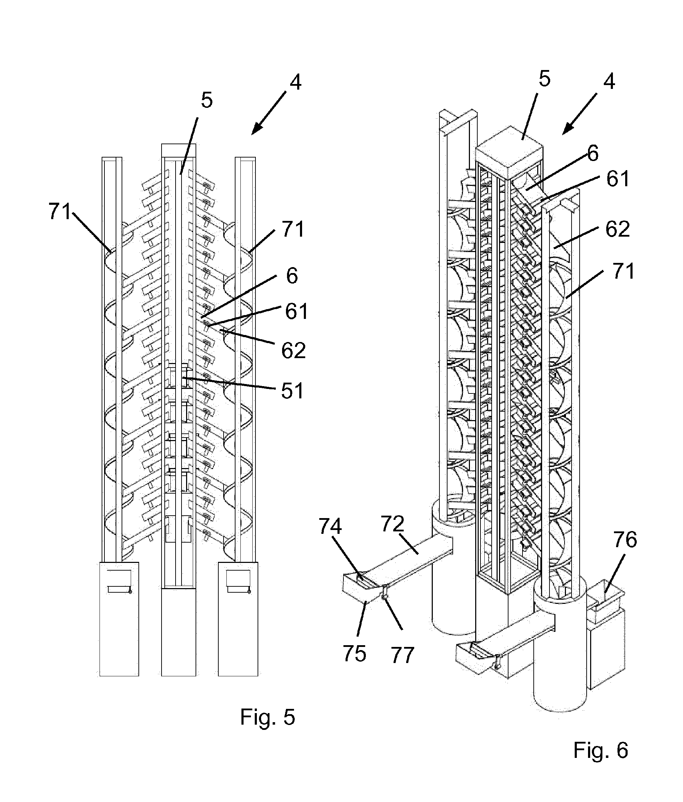

Die Figuren 4 bis 6 zeigen jeweils schematisch in verschiedenen Ansichten einen Artikelspeicherturm 4, welcher beispielsweise in der Kommissioniervorrichtung 1 der Figuren 1 bis 3 eingesetzt ist. Die Figuren 4 und 5 zeigen dabei den Artikelspeicherturm 4 mit einer Sicht von der Zuführeinrichtung 3, während Figur 6 den Artikelspeicherturm 4 mit einer Sicht von der Transporteinrichtung 9 zeigt.

Der Artikelspeicherturm 4 aus den Figuren 4 bis 6 ist nur ein mögliches Ausführungsbeispiel für den Artikelspeicherturm 4 und kann im Vergleich zu der dargestellten Ausführungsform zahlreiche Modifikationen aufweisen.

Der Artikelspeicherturm 4 weist etwa mittig die Fahrstuhlvorrichtung 5 auf, zu deren beiden Seiten die Pufferplätze 6 vorgesehen sind. Die Pufferplätze 6 sind hierbei als vertikal übereinander angeordnete Rutschen ausgebildet.

Die Fahrstuhlvorrichtung 5 weist einen Artikelaufnahmebehälter 51 auf, welcher auf Höhe der einzelnen Pufferplätze 6 vertikal verfahrbar ist.

Ein Ausführungsbeispiel für den Artikelaufnahmebehälter 51 ist in Figur 7 näher dargestellt und nachfolgend erläutert. Der Artikelaufnahmebehälter 51 ist zur Aufnahme der Artikel von der Zuführeinrichtung 3 an wenigstens einer vertikalen Position stationierbar, an welcher ein Förderband 31 der Zuführeinrichtung 3 an dem Artikelspeicherturm 4 derart vorbeiführt, das eine Artikelaufnahme durch den Artikelaufnahmebehälter 51 von der Zuführeinrichtung 3 möglich ist.

In Figur 4 sind Stellen, an welchen eine solche Aufnahme möglich ist, schematisch dargestellt. An diesen Stellen ist jeweils an der Fahrstuhlvorrichtung 5 eine Artikelableitrutsche 52 vorgesehen, die von der Zuführeinrichtung 3 zu dem Artikelaufnahmebehälter 51 schräg nach unten verlaufend ausgerichtet ist. An jeder der Artikelableitrutschen 52 ist eine Weiche 53 vorgesehen. Die Weiche 53 kann derart ein- und ausgeklappt werden, dass eine Um- bzw. Ableitung der Artikel von dem jeweiligen Förderband 31 der Zuführeinrichtung 3 in den Artikelaufnahmebehälter 51 möglich ist. Die Weiche 53 kann beispielsweise derart ausgeklappt werden, dass sie auf dem Förderband 31 eine Sperre für einen Weitertransport der Artikel auf dem Förderband 31 ausbildet.

In Figur 4 ist die Weiche 53 in deaktiviertem Zustand dargestellt, in welchem die Artikel nicht auf die Artikelableitrutsche 52 geleitet werden können, da die Weiche 53 den Weg auf die Artikelableitrutsche 52 versperrt. Ist die Weiche 53 geöffnet, das heißt, aktiviert, ist sie aus dem Transportweg zur Artikelableitrutsche 52 weggeklappt, versperrt aber den Transportweg auf dem Förderband 31.

Wurden durch den Artikelaufnahmebehälter 51 Artikel aufgenommen, wird der Artikelaufnahmebehälter 51 zu einem der Pufferplätze 6 vertikal verfahren. Der Artikelaufnahmebehälter 51 kann dabei vertikal nach oben als auch vertikal nach unten verfahren werden. Er stoppt dabei so an einem der Pufferplätze 6, dass eine geeignete Abgabe des wenigstens einen durch den Artikelaufnahmebehälter 51 aufgenommenen Artikels auf dem Pufferplatz 6 möglich ist.

Da der Pufferplatz 6 als Rutsche ausgebildet ist, kann der Artikel beispielsweise ausgehend von dem Artikelaufnahmebehälter 51 in den Pufferplatz 6 hineinrutschen. Wie es nachfolgend anhand von Figur 7 noch näher erläutert wird, ist im Rutschenverlauf oder am Ende des als Rutsche ausgebildeten Pufferplatzes 6 die Pufferplatzschranke 61 vorgesehen, an welcher der oder die von dem Artikelaufnahmebehälter 51 auf den Pufferplatz 6 abgegebene bzw. abgegebenen Artikel zunächst stoppen. Es ist möglich, einen oder mehrere Artikel auf den Pufferplatz 6 abzulegen. Die Pufferplatzgröße ist dabei auf die Größe, insbesondere auf die Länge, und auf die Anzahl der auf dem jeweiligen Pufferplatz 6 abzulegenden Artikel 6 abgestimmt.

Auf dem Pufferplatz 6 können die eingelagerten Artikel solange zwischengelagert werden, bis sie hiervon abgefordert werden. Bei der Abforderung wird beispielsweise die in Figur 7 dargestellte Pufferplatzschranke 61 geöffnet, wodurch die auf dem Pufferplatz 6 liegenden Artikel bedingt durch ihre Schwerkraft zunächst auf einem Pufferplatzrutschenende 62 nach unten rutschen können. Für einen Weitertransport der jeweilig abgeforderten Artikel nach unten schließt sich an die Pufferplätze 6, in den Figuren 4 bis 6 jeweils links und rechts der Fahrstuhlvorrichtung 4, eine Wendelrutsche 71 an. Das Pufferplatzrutschenende 62 ist hierfür an die Außenkontur der Wendelrutsche 71 durch einen entsprechenden Ausschnitt angepasst. Die beiden dargestellten Wendelrutschen 71 sind mit jedem der Pufferplätze 6 verbunden, sodass beispielsweise von einem der Pufferplätze 6 die Artikel über die Wendelrutschen 71 nach unten befördert werden können.

Am unteren Ausgang der Wendelrutschen 71 ist jeweils ein Abgabeförderband 72 vorgesehen, welches sich typischerweise in Richtung der Artikelübergabestelle 8 bewegt. Die auf dem Abgabeförderband 72 aus der Wendelrutsche 71 ankommenden Artikel werden durch das Abgabeförderband 72 horizontal in Richtung der Artikelübergabestelle 8 transportiert. In den Ausführungsformen der Figuren 4 bis 6 ist an den Enden der Abgabeförderbänder 72 jeweils eine öffen- und schließbare Stauklappe 74 vorgesehen. Darüber hinaus ist für ein kontrolliertes Abwerfen der Artikel von dem Abgabeförderband 72 im Anschluss an das Abgabeförderband 72 ein Abgabetrichter 75 vorgesehen.

An dem der Artikelübergabestelle 8 gegenüber liegenden Ende des Abgabeförderbandes 72 ist in der Ausführungsform der Figuren 4 bis 6 jeweils eine Aufnahmevorrichtung 76 zur Sonderauslagerung von Artikeln vorgesehen. Die Aufnahmevorrichtung 76 kann, wie es in den Figuren 4 bis 6 beispielhaft dargestellt ist, durch Auslagerungskisten realisiert werden.

Figur 7 zeigt schematisch einen vergrößerten Teilbereich eines Artikelspeicherturmes 4 mit einer möglichen Ausführungsform des Artikelaufnahmebehälters 51, wie er beispielsweise in dem Artikelspeicherturm 4 der Figuren 4 bis 6 zum Einsatz kommen kann. Der Artikelaufnahmebehälter 51 von Figur 7 ist als ein oben offener Förderkorb ausgebildet. Der Förderkorb ist in dem dargestellten Ausführungsbeispiel zylindrisch ausgebildet, kann jedoch in anderen Ausführungsformen der Erfindung auch andere Formen besitzen. Der Förderkorb ist hinsichtlich seiner oberen Öffnung so ausgebildet, dass an ihn gut die Zuführeinrichtung 3 beispielsweise mithilfe der in Figur 7 dargestellten Artikelableitrutsche 52 angekoppelt werden kann. Hierfür weist die in Figur 7 dargestellte Artikelableitrutsche 52 einen etwa halbkreisförmigen Ausschnitt an ihrem Ende auf, der an die Außenkontur des Förderkorbes angepasst ist.

Im Inneren des Artikelaufnahmebehälters 51 von Figur 7 ist eine Förderrutsche 54 vorgesehen. Somit können die hier von der Artikelableitrutsche 52 kommenden Artikel direkt auf die Förderrutsche 54 weiter in den Artikelaufnahmebehälter 51 hineinrutschen. Die Förderrutsche 54 ist um eine vertikale Behälterachse des Artikelaufnahmebehälters 51 drehbar. Daher können die auf der Förderrutsche 54 aufliegenden Artikel mit der Förderrutsche 54 gedreht werden. Der Artikelaufnahmebehälter 51 weist ferner an wenigstens einer Seite eine seitliche Öffnung 55 auf. Wird die Förderrutsche 54 zu einer dieser seitlichen Öffnungen 55 hin gedreht, können die auf der Förderrutsche 54 aufliegenden Artikel aus der seitlichen Öffnung 55 austreten.

Eine Drehung der Förderrutsche 54 wird beispielsweise dann vorgenommen, wenn sich der Artikelaufnahmebehälter 51 auf Höhe eines der Pufferplätze 6 befindet. Damit können durch Drehen der Förderrutsche 54 an einer solchen Position die Artikel über die seitliche Öffnung 55 des Artikelaufnahmebehälters 51 auf die jeweiligen Pufferplätze 6 hinabrutschen.

An den Artikelaufnahmebehälter 51 schließt sich dann der Pufferplatz 6 an. Der Pufferplatz 6 aus Figur 7 ist in Form einer schräg nach unten ausgerichteten Rutsche ausgebildet, wobei, wie oben bereits beschrieben, im Rutschenverlauf die öffen- und schließbare Pufferplatzschranke 61 vorgesehen ist.

Das Pufferplatzrutschenende 62 des Pufferplatzes 6 ist in Anpassung an die sich anschließende Wendelrutsche 71 etwa halbkreisförmig ausgeschnitten ausgebildet.

Figur 8 zeigt schematisch in einer vergrößerten Darstellung einen unteren Abschnitt eines Artikelförderturmes 4 mit einem Abgabeförderband 72. Neben den oben bereits erläuterten Merkmalen, wie der öffen- und schließbaren Stauklappe 74 sowie des Abgabetrichters 75, ist in der Darstellung von Figur 8 noch ein Identifikationssensor 77 an dem Abgabeförderband 72 vorgesehen. Der Identifikationssensor 77 dient einer Identifikation der an der Artikelübergabestelle 8 ankommenden und mit Artikeln gefüllten Sammelbehälter 91. Durch den Identifikationssensor 77 kann der jeweilige Sammelbehälter 91, in welchen ein bestimmter Artikel abgegeben wird, genau identifiziert werden, was widerum eine Zuordnung von Artikel und Sammelbehälter 91 ermöglicht.

Die Kommissioniervorrichtung 1 weist vorzugsweise eine beispielsweise in Figur 1 schematisch dargestellte Steuereinrichtung 10 auf, mit welcher alle Transport-, Speicher- und Zwischenspeichervorgänge von Artikeln in der Kommissioniervorrichtung 1 gesteuert und gespeichert werden können. Insbesondere wird durch die Steuereinrichtung 10 auch eine die jeweiligen Artikel identifizierende Artikelkennung aufgenommen und gespeichert. Mithilfe der Steuereinrichtung 10 ist es möglich, nicht nur die kommissionierten Artikel selbst, sondern den Transportweg jedes der kommissionierten Artikel in der Kommissioniervorrichtung 1 von seiner Aufgabe auf die Zuführeinrichtung 3 bis zur Abgabe des Artikels an einen der Sammelbehälter 91 genau nachzuvollziehen. Insbesondere wird durch die Steuereinrichtung 10 aber auch eine effiziente Auslastung der erfindungsgemäßen Kommissioniervorrichtung 1 realisiert. Die Steuereinrichtung 10 steuert die Aufgabe von Artikeln auf die Zuführeinrichtung 3, den Transport der Artikel auf der Zuführeinrichtung 3, die Abgabe der Artikel an den jeweiligen Artikelspeicherturm 4, bestimmt den Pufferplatz 6, an dem der jeweilige Artikel zwischengelagert wird, und steuert die Ausgabe des bzw. der zwischengelagerten Artikel von den Pufferplätzen 6 und erfasst den jeweiligen Sammelbehälter 91, in den der entsprechende Artikel bzw. die entsprechenden Artikel abgegeben werden.

## Patentansprüche

1. Kommissioniervorrichtung (1) zum Kommissionieren kubisch verpackter Artikel, welche eine Zuführeinrichtung (3) zum Transportieren wenigstens eines der Artikel zu wenigstens einer Artikelübergabestelle (8), an welcher eine Übergabe des wenigstens einen Artikels in wenigstens einen Sammelbehälter (91) erfolgt, und eine Transporteinrichtung (9) zum Hintransportieren der Sammelbehälter (91) zu der Artikelübergabestelle (8) und zum Wegtransportieren der mit dem wenigstens einen Artikel bepackten Sammelbehälter (91) von der Artikelübergabestelle (8) aufweist,
**dadurch gekennzeichnet,**
**dass** zwischen der Zuführeinrichtung (3) und der wenigstens einen Artikelübergabestelle (8) eine Artikelpuffervorrichtung zum zeitlichen Zwischenlagern des wenigstens einen Artikels vorgesehen ist, wobei die Artikelpuffervorrichtung wenigstens einen Artikelspeicherturm (4) mit jeweils wenigstens zwei vertikal übereinander angeordneten Pufferplätzen (6) und jeweils einer Fahrstuhlvorrichtung (5) mit einem vertikal verfahrbaren Artikelaufnahmebehälter (51) aufweist, der derart an der Zuführeinrichtung (3) und auf Höhe der Pufferplätze (6) positionierbar ist, dass der Artikelaufnahmebehälter (51) den wenigstens einen Artikel von der Zuführeinrichtung (3) aufnehmen und diesen wenigstens einen Artikel an wenigstens einem der Pufferplätze (6) ausgeben kann, und wobei sich an jeden der Pufferplätze (6) eine tendenziell vertikal nach unten gerichtete Artikelförderstrecke zum schwerkraftveranlassten Befördern der an den Pufferplätzen (6) zwischengelagerten Artikel in Richtung der Artikelübergabestelle (8) anschließt.

2. Kommissioniervorrichtung nach Anspruch 1, **dadurch gekennzeichnet, dass** der wenigstens eine Artikel eine eindeutig den Artikel identifizierende Artikelkennung aufweist und die Kommissioniervorrichtung (1) eine den Transportweg des Artikels in der Kommissioniervorrichtung (1) von seiner Aufgabe auf die Zuführeinrichtung (3) bis zur Abgabe des Artikels an einen der Sammelbehälter (91) steuernde und speichernde Steuereinrichtung (10) aufweist.

3. Kommissioniervorrichtung nach Anspruch 1 oder 2, **dadurch gekennzeichnet, dass** der Artikelaufnahmebehälter (51) ein oben offener Förderkorb mit mindestens einer seitlichen Öffnung (55) ist, wobei der Förderkorb oder eine im Inneren des Förderkorbes vorgesehene Förderrutsche (54) wenigstens teilweise um eine vertikale Behälterachse drehbar ist.

4. Kommissioniervorrichtung nach wenigstens einem der vorhergehenden Ansprüche, **dadurch gekennzeichnet, dass** die Artikelförderstrecke eine Wendelrutsche (71) aufweist.

5. Kommissioniervorrichtung nach wenigstens einem der vorhergehenden Ansprüche, **dadurch gekennzeichnet, dass** die Pufferplätze (6) Rutschen sind, wobei im Rutschenverlauf oder am Rutschenende jeweils eine öffen- und schließbare Pufferplatzschranke (61) vorgesehen ist.

6. Kommissioniervorrichtung nach wenigstens einem der vorhergehenden Ansprüche, **dadurch gekennzeichnet, dass** am Ende der Artikelförderstrecke, vor der Artikelübergabestelle (8) ein Abgabeförderband (72) zum Befördern und Abgeben des wenigstens einen Artikels in den wenigstens einen Sammelbehälter (91) vorgesehen ist.

7. Kommissioniervorrichtung nach Anspruch 6, **dadurch gekennzeichnet, dass** auf dem Transportweg oder an dem die Artikelübergabestelle (8) bildenden Ende des Abgabeförderbandes (72) eine öffen- und schließbare Stauklappe (74) vorgesehen ist.

8. Kommissioniervorrichtung nach Anspruch 6 oder 7, **dadurch gekennzeichnet, dass** an dem der Artikelübergabestelle (8) gegenüber liegenden Ende des Abgabeförderbandes (72) eine Aufnahmevorrichtung (76) zur Sonderauslagerung von Artikeln vorgesehen ist.

9. Kommissioniervorrichtung nach wenigstens einem der vorhergehenden Ansprüche, **dadurch gekennzeichnet, dass** an der Artikelübergabestelle (8) wenigstens ein Identifikationssensor (77) zur Identifikation des Sammelbehälters (91), in den der wenigstens eine an der Artikelübergabestelle (8) in den Sammelbehälter (91) abgegebene Artikel abgegeben wird, vorgesehen ist.

10. Kommissioniervorrichtung nach wenigstens einem der vorhergehenden Ansprüche, **dadurch gekennzeichnet, dass** die Zuführeinrichtung (3) wenigstens ein Zuführförderband (31) aufweist, das von wenigstens einem Artikelspeicher (2) oder wenigstens einer automatisch oder manuell kommissionierbaren Artikelaufgabestelle zu dem wenigstens einen Artikelspeicherturm (4) der Artikelpuffervorrichtung führt, wobei auf dem Zuführförderband (31) auf wenigstens einer Öffnungshöhe der Fahrstuhlvorrichtung (5) des wenigstens einen Artikelspeicherturmes (4) wenigstens eine aktivier- und deaktivierbare Weiche (53) zur Ableitung der Artikel von dem Zuführförderband (31) in den Artikelaufnahmebehälter (51) der Fahrstuhlvorrichtung (5) des jeweiligen Artikelspeicherturmes (4) vorgesehen ist.

11. Kommissioniervorrichtung nach Anspruch 10, **dadurch gekennzeichnet, dass** zwischen dem durch die Weiche (53) definierbaren Ableitpunkt der Artikel auf dem Zuführförderband (31) und dem Artikelaufnahmebehälter (51) eine Artikelableitrutsche (52) vorgesehen ist.

12. Kommissioniervorrichtung nach Anspruch 10 oder 11, **dadurch gekennzeichnet, dass** die Zuführeinrichtung (3) wenigstens zwei in unterschiedlichen Höhen verlaufende Förderstrecken aufweist, wobei jede Förderstrecke ein eigenes Zuführförderband (31) aufweist.

13. Kommissioniervorrichtung nach wenigstens einem der vorhergehenden Ansprüche, **dadurch gekennzeichnet, dass** bei wenigstens einem der Artikelspeichertürme (4) die Pufferplätze (6) und die zugehörigen Artikelförderstrecken an wenigstens zwei Seiten der Fahrstuhlvorrichtung (5) vorgesehen sind.

14. Verfahren zum Kommissionieren kubisch verpackter Artikel mit einer Kommissioniervorrichtung (1), wobei durch eine Zuführeinrichtung (3) wenigstens einer der Artikel zu wenigstens einer Artikelübergabestelle (8) transportiert wird, und an der Artikelübergabestelle (8) eine Übergabe des wenigstens einen Artikels in wenigstens einen Sammelbehälter (91) erfolgt, der durch eine Transporteinrichtung (9) zu der Artikelübergabestelle (8) hin transportiert wird und mit dem wenigstens einen Artikel bepackt von der Artikelübergabestelle (8) weg transportiert wird,
**dadurch gekennzeichnet,**
**dass** der wenigstens eine Artikel in einer zwischen der Zuführeinrichtung (3) und der wenigstens einen Artikelübergabestelle (8) vorgesehenen Artikelpuffervorrichtung zwischengelagert wird, indem die Artikelpuffervorrichtung wenigstens einen Artikelspeicherturm (4) mit jeweils wenigstens zwei vertikal übereinander angeordneten Pufferplätzen (6) und jeweils einer Fahrstuhlvorrichtung (5) mit einem vertikal verfahrbaren Artikelaufnahmebehälter (51) aufweist, der an der Zuführeinrichtung (3) positioniert wird, wobei der Artikelaufnahmebehälter (51) den wenigstens einen Artikel von der Zuführeinrichtung (3) aufnimmt, daraufhin der Artikelaufnahmebehälter (51) auf Höhe eines der Pufferplätze (6) positioniert wird und dort der wenigstens eine Artikel auf den Pufferplatz (6) ausgegeben wird, auf dem der wenigstens eine Artikel bis zu seiner Abforderung gelagert wird, und wobei zur Ausgabe dieses wenigstens einen Artikels dieser über eine sich an jeden der Pufferplätze (6) anschließende, tendenziell vertikal nach unten gerichtete Artikelförderstrecke durch seine Schwerkraft nach unten in Richtung der Artikelübergabestelle (8) befördert wird.

15. Verfahren nach Anspruch 14, **dadurch gekennzeichnet, dass** der wenigstens eine Artikel identifiziert wird und der Transportweg des Artikels durch die Kommissioniervorrichtung (1) mit einer Steuereinrichtung (10) gesteuert und gespeichert wird.
